# EUROPEAN PATENT SPECIFICATION

(11) **EP 1 828 956 B1**
(45) Date of publication and mention of the grant of the patent: **24.06.2009**
(21) Application number: 04804551.2
(22) Date of filing: 22.11.2004
(51) Int. Cl.: G06K 7/10

(54) **BAR CODE SCANNER AND METHOD OF MANUFACTURING A BAR CODE SCANNER**
STRICHCODE-SCANNER UND VERFAHREN ZUR HERSTELLUNG EINES STRICHCODE-SCANNERS
LECTEUR DE CODE A BARRES ET PROCEDE DE FABRICATION DU DIT LECTEUR

(30) Priority: 03.12.2003 GB 0328022
(43) Date of publication of application: 05.09.2007
(73) Proprietor: Money Controls Limited, Royton, Oldham OL2 6JZ (GB)
(72) Inventor: RICHARDSON, Andrew, Bolton Lancashire BL6 5TQ (GB)
(74) Representative: Read, Matthew Charles
(86) International application number: PCT/EP2004/053046
(87) International publication number: WO 2005/055123

(56) References cited:
- WO-A-02/17215
- WO-A-03/034355

## Description

### Field of the Invention

The present invention relates to a method of manufacturing a bar code scanner.

### Background to the Invention

Bar code scanners generally have a light source which shines a beam of light onto a bar code being read. The light reflected from the bar code is then sensed with photodetector. The light source may be a laser or a light emitting diode and a lens is conventionally used for focusing the beam on the bar code. Similarly, a lens is also commonly used to focus the reflected light onto the photodetector. Reference is directed to WO 02/17215A which discloses a bar code scanner without a collimating lens arrangement that uses a laser as a light source.

### Summary of the Invention

It is an aim of the present invention to provide a bar code scanner that does not employ lenses.

According to the present invention, there is provided a bar code scanner according to claim 1, which is characterised in that the bar code scanner does not employ lenses to focus the beam on the bar code or to focus the beam on the light detector means, and the light source means is a led. The slit need not have a particularly high aspect ration. However, it should be narrow where the major part of the light from the light source passes through it. The slit need not be parallel-sided and may be, for example, dumbbell-shaped. The slit need not comprise an aperture. The important characteristic is its light transmissivity.

The light source means may be configured for directing said beam through the slit such that the beam path through the slit lies in a plane substantially aligned with the slit. The light source means may be configured to direct light obliquely through the slit.

The light detector means may be configured for sensing reflections of said beam following a path through the slit that lies in a plane substantially aligned with the slit. The light detector means may be directional and arranged such that it is directed along a line substantially normal to the slit.

The combination of oblique illumination and the sensing of light reflected normal to the slit provides protection against false reading of glossy bar codes.

The slit is formed in a metallic element, for example a stainless steel. However, other materials that can be finely worked, such as brass, can be used.

The scanner may be handheld so that the scanning action is performed manually by moving the scanner. Alternatively, the scanner may be mounted in a fixed position so that bar codes can be manually or mechanically propelled past the scanner to provide the scanning action. The scanner could also itself be mechanically moved past bar codes for scanning.

The scanner may include a panel by which a sheet can be passed, the panel having an aperture through which the slit is exposed. The panel need not be flat. There may also be a member, having a dished portion received in the aperture, with the slit formed in an opaque element that is accommodated in the dished portion.

The width of the slit may be in the range 0.2mm to 0.4mm and is preferably 0.3mm.

The separation of the openings of the slit is in the range 0.05 to 0.1 mm and is preferably 0.075mm.

According to the present invention, there is provided a sheet validator including a sheet path along which a sheet to be validated is passed and a bar code scanner, according to the present invention, located for scanning a bar code on a sheet passing along the sheet path.

According to the present invention, there is also provided a method of method of manufacturing a bar code scanner as claimed in claim 16 hereinafter.

### Brief Description of the Drawings

Figure 1 is a schematic side view of a sheet validator unit;
Figure 2 is a partially cut away side view of the sheet validation and storage unit of Figure 1;
Figure 3 is a section view of the bar code scanning station of the unit of Figure 1 viewed from the entry slot of the validator of Figure 1;
Figure 4 is a bottom view of the bar code scanning station shown in Figure 3;
Figure 5 shows a sheet with a bar code printed on it; and
Figure 6 illustrates a manufacturing process of manufacturing sheet validators.

### Detailed Description of Exemplary Embodiment

An embodiment of the present invention will now be described, by way of example, with reference to the accompanying drawings, in which:

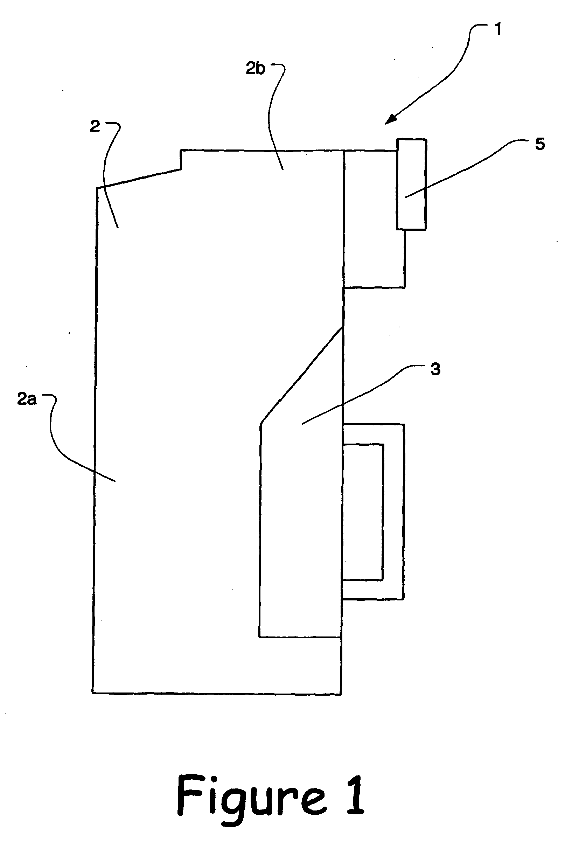

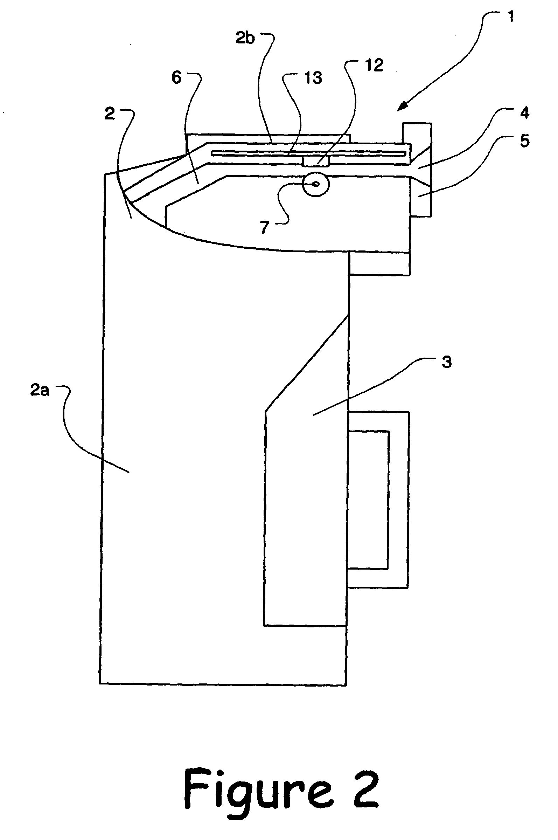

Referring to Figures 1 and 2, a sheet validator 1 comprises a main body 2 and a removable storage box 3. The unit 1 is substantially the same as the WACS 5 note validator available from Money Controls plc.

The main body 2 has a vertical portion 2a and a horizontal portion 2b projecting from the bottom of the vertical portion 2a. A sheet entry slot 4 opens through a bezel 5 at the distal end of the horizontal portion 2b. A sheet transport path 6 extends through the horizontal portion 2a and down the vertical portion 2a. Sheets are transported through the horizontal portion 2a by driven wheels 7 (only one shown by way of illustration) and belts (not shown), driven by a motor (not shown).

Sheets are transported down the vertical portion and, if determined to be valid, are driven transversely into the storage box 3. Sheets determined to be invalid are reversed back out of the entry slot 4.

A bar code scanning station 12 mounted to a PCB 13 located above and parallel to the sheet path in the horizontal portion 2b. There may be addition optical and/or magnetic sensors for conventional validity determination and sheet transport control.

The PCB 13 includes circuitry for processing sensor signals, including signals from the bar code scanning station for input to a processor (not shown) for note validation and sheet transport control.

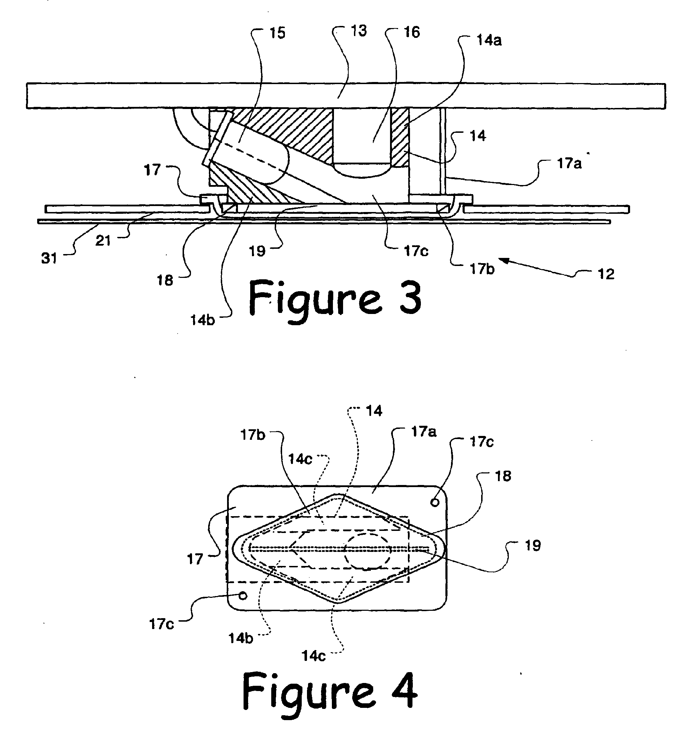

Referring to Figures 3 and 4, the bar code reading 12 station comprises a opaque locating block 14, a infrared LED 15, a phototransistor 16, a cover 17 and a thin metal plate 18. The phototransistor 16 sits on the PCB 13 and its leads are soldered to tracks on the other side of the PCB 13. The leads of the LED 15 are soldered on the same side of the PCD 13 as those of the phototransistor 16. However, the LED 15 does not sit on the PCB 13 and is supported within the locating block 14.

The PCB 13 is fixed by screws (not shown) to the upper wall 21 of the sheet path bar code scanning station 12 is clamped between the upper wall 21 of the sheet path and the PCB 13.

The cover 17 is moulded from a transparent plastics material and comprises a rectangular plate 17a that has a rounded rhombic dished portion 17b. A pair of legs 17c project from diagonally opposite corners of the plate 17a and the free ends of the legs 17c bear against the under side of the PCB 13. The dished portion 17b is received snugly in a rhombic aperture in the upper wall 21 of the sheet path.

The locating block 14 is located between the cover 17 and the PCB 13 and comprises a main portion 14a and a press-fitted cover portion 14b. The cover portion 14b has a pair of small lugs (not show) that are received by apertures (not shown) in the side walls of the main portion 14a to retain the cover portion 14b in position.

A pair of ridges 14c project from the bottom of the main portion 14a and are received in the dished portion 17b of the cover 17. The ends of the ridges 14c are chamfered for locating the locating block 14 relative to the cover 17. The ridges 14c extend from one end of the locating block 14 to a position somewhat short of the other end of the location block 14, which overhangs the planar part of the cover 17.

A channel extends transversely across the underside, in the orientation shown in Figure 3, of the main portion 14a of the locating block 14. The floor of the right hand part of the channel, in the orientation shown in Figure 3, is flat while the floor of the left hand part has a semi-circular cross-section and slopes towards the PCB 13. When the cover portion 14b is fitted in place, the upper side of the cover portion 14b and the left hand part of the channel define a sloping circular-section passageway in which the LED 15 is received.

The phototransistor 16 is received in a circular-section passageway the extends through the main portion 14a from its upper face to the floor of the channel in the right hand part thereof. The passageway holding the phototransistor 16 is arranged to extend normal to the PCB 13 and the sheet path 6.

A thin metal plate 18 is rhombic and conforms to the dished portion 17b of the cover 17 in which it is located. The plate 18 has a thin transverse slit 19 extending across the plate 18 between positions close to the sharper corners of the plate 18. The plate 18 is 0.075±0.025mm thick and the slit is 0.3±0.1mm wide.

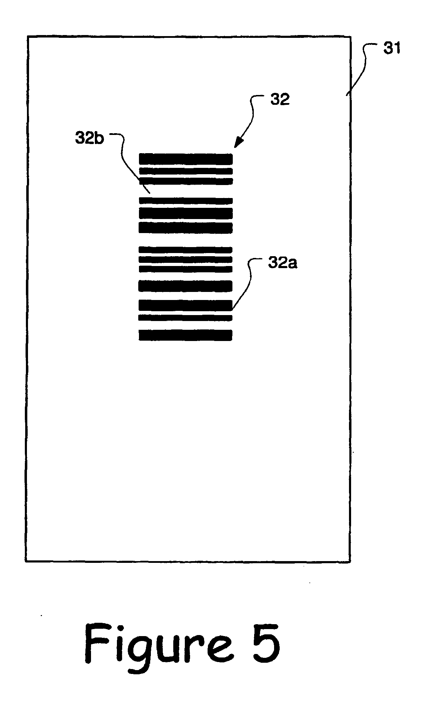

In use, a sheet 31 bearing a longitudinal bar code 32, as shown in Figure 5, is driven past the bar code scanning station 12. The LED 15 shines light onto the bar code 32 as it passes under the slit 19. The light from the LED 15 is reflected from the sheet 31. However, the level of reflected light from dark bar code elements 32a is negligible compared to the level of reflected light from light bar code elements 32b. The reflected light is sensed by the phototransistor 16 which produces an electrical output dependent on the incident light level. Thus, the output of the phototransistor 16 varies with the reflectivity of the bar code portion aligned with the slit 19. The output of the phototransistor 16 is processed in a conventional manner.

It should be noted that the LED 15 shines light through the slit 19 obliquely whereas the phototransistor 16 is arranged to sense light reflected normal to the sheet 31 bearing the bar code being read. Consequently, glossy dark bar code elements 32a are not erroneously determined to be light elements 32b.

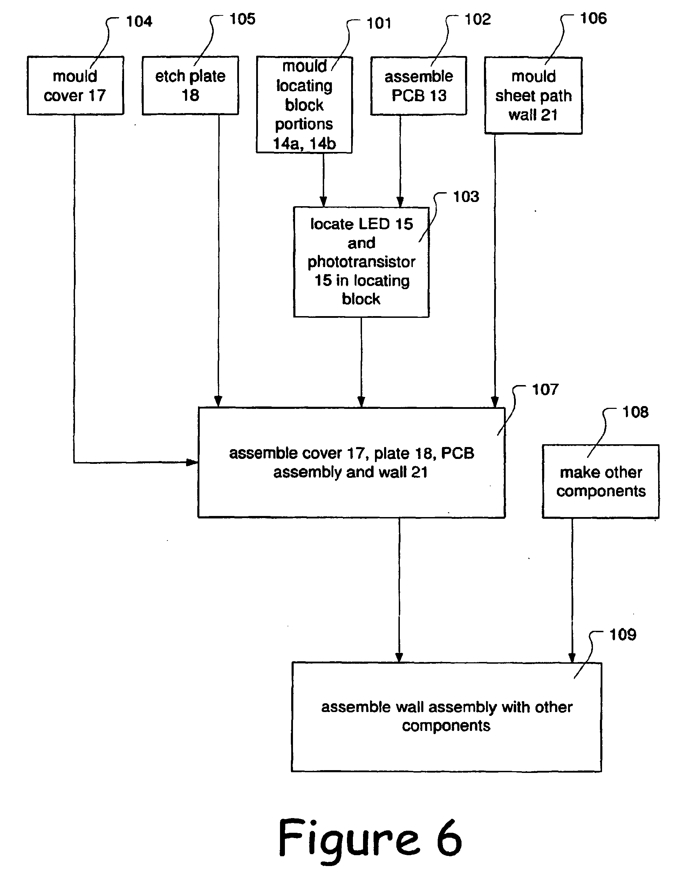

A method of manufacturing a sheet validating apparatus will now be described with reference to Figure 6.

The portions 14a, 14b of the locating block 14 are moulded using a conventional technique in a locating block moulding operation 101 and the PCB 13 is assembled in a PCB assembly operation 102. The PCB assembly operation 102 comprises soldering electronic components, including the LED 15 and the phototransistor 16, to the PCB 13 itself.

The locating block 14 is then added to the PCB assembly in a locating block mounting operation 103. In the locating block mounting operation, the main portion 14a is pushed over the phototransistor 16 so that the phototransistor 16 is lodged in the circular-section passageway though the main portion 14a and the main portion 14a rests against the PCB 13.

The LED 15 is introduced into the sloping part of the channel and the cover portion 14b is then pressed into place to retain the LED 15 in position.

The cover 18 is moulded in a cover moulding operation 104 using a conventional technique.

The plate 18 is formed in an etching operation 105 by etching a sheet of stainless steel using a photochemical etching process.

The upper wall 21 of the sheet path is moulded in an injection moulding operation 106.

The components produced in operations 101 to 106 are assembled together in an assembly operation 107. In the assembly operation 107, the cover 18 is positioned on the upper wall 21 with its dished portion 18a projecting into the rhombic aperture in the upper wall 21. The PCB assembly is then offered up to the upper wall 21 and fixed using screws. This locates the locating block 14 correctly with respect to the cover 18.

The other components of the validator, including control and validation electronics and sheet handling mechanical and electromechanical components, are formed in a set of operations 108.

Finally, the validator is assembled from the components and sub-assemblies available after operations 107 and 108 in an final assembly operation 109.

It will be appreciated that many modifications may be made to the embodiment described above. For example, the plate may be formed by laser cutting or punching instead of etching. The plate and the cover need not be rhombic and the bar code scanning station could be positioned under the sheet path.

## Claims

1. A bar code scanner comprising light source means (15), light detector means (16) and a light transmissive slit (19) for being brought into proximity with a bar code (32) for scanning thereof, , the light source means (15) being configured for directing a beam through said slit (19) and the light detector means (16) being configured for detecting light from said beam reflected back through the slit (19), **characterised in that:**
the bar code scanner does not employ lenses to focus the beam on the bar code or to focus the beam on the light detector means (16); and
the light source means is a LED

2. A bar code scanner according to claim 1, wherein the light source means (15) is configured for directing said beam through the slit (19) such that the beam path through the slit (19) lies in a plane substantially aligned with the slit (19).

3. A bar code scanner according to claim 2, where in the light source means (15) is configured to direct light obliquely through the slit (19).

4. A bar code scanner according to claim 1, 2 or 3, wherein the light detector means (16) is configured for sensing reflections of said beam following a path through the slit (19) that lies in a plane substantially aligned with the slit (19).

5. A bar code scanner according to claim 4, wherein the light detector means (16) is directional and arranged such that it is directed along a line substantially normal to the slit (19).

6. A bar code scanner according to any preceding claim, wherein the slit is formed in a metallic element..

7. A bar code scanner according to claim 6, wherein the element (18) is formed from a stainless steel.

8. A bar code scanner according to any preceding claim, including a panel (21) by which a sheet (31) can be passed, the panel (21) having an aperture through which the slit (19) is exposed.

9. A bar code scanner according to claim 8, including a member (17) having a dished portion, wherein the slit (19) is formed in an opaque element (18) which is accommodated in said dished portion and the dished portion is received in said aperture.

10. A bar code scanner according to any preceding claim, wherein the width of the slit (19) is in the range 0.2mm to 0.4mm.

11. A bar code scanner according to claim 10, wherein the width of the slit (19) is 0.3mm.

12. A bar code scanner according to any preceding claim, wherein the separation of the openings of the slit (19) is in the range 0.05 to 0.1 mm.

13. A bar code scanner according to claim 12, wherein the separation of the openings of the slit (19) is 0.075mm.

14. A sheet validator including a sheet path (6) along which a sheet (31) to be validated is passed and a bar code scanner (12), according to any preceding claim, located for scanning a bar code (32) on a sheet (31) passing along the sheet path (6).

15. A method of manufacturing a bar code scanner comprising forming a light transmissive slit (19) and mounting the slit with respect to a light source means (15) and a light detector means (16), such that light from the light source means (15) can pass through the slit (19) and light from the light source means (15) that is reflected back through the slit (19) can be detected by the light detector means (16),
**characterised in that:**
the bar code scanner does not employ lenses to focus the beam on the bar code or to focus the beam on the light detector means (16); and
the light source means is a LED.

16. A method according to claim 15, wherein the slit (19) is formed by chemically etching a thin metallic element (18).

17. A method of manufacturing a sheet validator including a bar code scanner (12), the method including a method according to claim 15 or 16 for manufacturing said bar code scanner (12).

## Patentansprüche

1. Strichcodescanner, umfassend eine Lichtquelleneinrichtung (15), eine Lichtdetektoreinrichtung (16) und einen lichtdurchlässigen Schlitz (19) zur Anordnung in der Nähe eines Strichcodes (32), um diesen zu scannen, wobei die Lichtquelleneinrichtung (15) dazu ausgelegt ist, einen Strahl durch den Schlitz (19) zu richten, und wobei die Lichtdetektoreinrichtung (16) dazu ausgelegt ist, Licht von dem durch den Schlitz (19) zurückreflektierten Strahl zu detektieren, **dadurch gekennzeichnet, dass:**
der Strichcodescanner keine Linsen benutzt, um den Strahl auf den Strichcode zu fokussieren oder um den Strahl auf die Lichtdetektoreinrichtung (16) zu fokussieren; und
die Lichtquelleneinrichtung eine LED ist.

2. Strichcodescanner nach Anspruch 1, wobei die Lichtquelleneinrichtung (15) dazu ausgelegt ist, den Strahl durch den Schlitz (19) derart zu richten, dass der Strahlweg durch den Schlitz (19) in einer Ebene liegt, die im wesentlichen zu dem Schlitz (19) ausgerichtet ist.

3. Strichcodescanner nach Anspruch 2, wobei die Lichtquelleneinrichtung (15) dazu ausgelegt ist, Licht schräg durch den Schlitz (19) zu richten.

4. Strichcodescanner nach Anspruch 1, 2, oder 3, wobei die Lichtdetektoreinrichtung (16) dazu ausgelegt ist, Reflektionen des Strahls entlang eines Wegs durch den Schlitz (19) zu messen, der in einer Ebene liegt, die im wesentlichen zu dem Schlitz (19) ausgerichtet ist.

5. Strichcodescanner nach Anspruch 4, wobei die Lichtdetektoreinrichtung (16) gerichtet und derart angeordnet ist, dass sie entlang einer Linie ausgerichtet ist, die im wesentlichen orthogonal zum Schlitz (19) ist.

6. Strichcodescanner nach einem der vorhergehenden Ansprüche, wobei der Schlitz in einem metallischen Element gebildet ist.

7. Strichcodescanner nach Anspruch 6, wobei das Element (18) aus einem rostfreien Stahl gebildet ist.

8. Strichcodescanner nach einem der vorhergehenden Ansprüche, umfassend eine Platte (21), an der ein Blatt (31) vorbeibewegt werden kann, wobei die Platte (21) eine Öffnung aufweist, durch welche der Schlitz (19) freiliegt.

9. Strichcodescanner nach Anspruch 8, umfassend ein Element (17) mit einem gewölbten Bereich, wobei der Schlitz (19) in einem opaken Element (18) gebildet ist, das in dem gewölbten Bereich untergebracht ist, und wobei der gewölbte Bereich in der Öffnung aufgenommen ist.

10. Strichcodescanner nach einem der vorhergehenden Ansprüche, wobei die Breite des Schlitzes (19) in einem Bereich von 0,2 mm bis 0,4 mm liegt.

11. Strichcodescanner nach Anspruch 10, wobei die Breite des Schlitzes (19) 0,3 mm beträgt.

12. Strichcodescanner nach einem der vorhergehenden Ansprüche, wobei die Trennung der Öffnungen des Schlitzes (19) im Bereich von 0,05 bis 0,1 mm liegt.

13. Strichcodescanner nach Anspruch 12, wobei die Trennung der Öffnungen des Schlitzes (19) 0,075 mm beträgt.

14. Blattprüfeinrichtung, umfassend einen Blattweg (6), entlang dem ein zu prüfendes Blatt (31) bewegt wird, sowie einen Strichcodescanner (12) nach einem der vorhergehenden Ansprüche, der zum Scannen eines Strichcodes (32) auf einem Blatt (31) angeordnet ist, welches entlang des Blattwegs (6) bewegt wird.

15. Verfahren zum Herstellen eines Strichcodescanners, umfassend das Bilden eines lichtdurchlässigen Schlitzes (19) und das Montieren des Schlitzes bezüglich einer Lichtquelleneinrichtung (15) und einer Lichtdetektoreinrichtung (16) derart, dass Licht von der Lichtquelleneinrichtung (15) durch den Schlitz (19) gelangen kann, und dass Licht von der Lichtquelleneinrichtung (15), welches durch den Schlitz (19) zurückreflektiert wird, durch die Lichtdetektoreinrichtung (16) detektiert werden kann, **dadurch gekennzeichnet, dass:**
der Strichcodescanner keine Linsen benutzt, um den Strahl auf den Strichcode zu fokussieren, oder um den Strahl auf die Lichtdetektoreinrichtung (16) zu fokussieren; und
die Lichtquelleneinrichtung eine LED ist.

16. Verfahren nach Anspruch 15, wobei der Schlitz (19) durch chemisches Ätzen eines dünnen metallischen Elements (18) gebildet wird.

17. Verfahren zum Herstellen einer Blattprüfeinrichtung, die einen Strichcodescanner (12) umfaßt, wobei das Verfahren ein Verfahren nach Anspruch 15 oder 16 zum Herstellen des Strichcodescanners (12) umfaßt.

## Revendications

1. Lecteur de code à barres comportant un moyen (15) à source de lumière, un moyen (16) à détecteur de lumière et une fente (19) transmettant la lumière destiné à être amené à proximité d'un code à barres (32) pour en réaliser la lecture, le moyen à source de lumière (15) étant configuré pour diriger un faisceau à travers ladite pente (19) et le moyen (16) détecteur de lumière étant configuré pour détecter de la lumière provenant dudit faisceau revenant par réflexion à travers la fente (19), **caractérisé en ce que :**
le lecteur de code à barres n'utilise pas de lentilles pour focaliser le faisceau sur le code à barres ou pour focaliser le faisceau sur le moyen (16) à détecteur de lumière ; et
le moyen à source de lumière est une DEL.

2. Lecteur de code à barres selon la revendication 1, dans lequel le moyen (15) à source de lumière est configuré pour diriger ledit faisceau à travers la fente (19) afin que le chemin du faisceau à travers la fente (19) soit contenu dans un plan sensiblement aligné avec la fente (19).

3. Lecteur de code à barres selon la revendication 2, dans lequel le moyen (15) à source de lumière est configuré pour diriger de la lumière obliquement à travers la fente (19).

4. Lecteur de code à barres selon la revendication 1, 2 ou 3, dans lequel le moyen (16) à détecteur de lumière est configuré pour capter des réflexions dudit faisceau suivant un chemin passant à travers la fente (19) qui est contenu dans un plan sensiblement aligné avec la fente (19).

5. Lecteur de code à barres selon la revendication 4, dans lequel le moyen (16) à détecteur de lumière est directionnel et est agencé de manière qu'il soit dirigé suivant une ligne sensiblement normale à la fente (19).

6. Lecteur de code à barres selon l'une quelconque des revendications précédentes, dans lequel la fente est formée dans un élément métallique.

7. Lecteur de code à barres selon la revendication 6, dans lequel l'élément (18) est formé en acier inoxydable.

8. Lecteur de code à barres selon l'une quelconque des revendications précédentes, comprenant un panneau (21) par lequel on peut faire passer une feuille (31), le panneau (21) ayant une ouverture à travers laquelle la fente (19) est exposée.

9. Lecteur de code à barres selon la revendication 8, comprenant un élément (17) ayant une partie en cuvette, dans lequel la fente (19) est formée dans un élément opaque (18) qui est logé dans ladite partie en cuvette et la partie en cuvette est reçue dans ladite ouverture.

10. Lecteur de code à barres selon l'une quelconque des revendications précédentes, dans lequel la largeur de la fente (19) est dans la plage de 0,2 mm à 0,4 mm.

11. Lecteur de code à barres selon la revendication 10, dans lequel la largeur de la fente (19) est de 0,3 mm.

12. Lecteur de code à barres selon l'une quelconque des revendications précédentes, dans lequel la séparation des ouvertures de la fente (19) est comprise dans la plage de 0,05 à 0,1 mm.

13. Lecteur de code à barres selon la revendication 12, dans lequel la séparation des ouvertures de la fente (19) est de 0,075 mm.

14. Dispositif de validation de feuille comprenant un chemin (6) de feuille le long duquel une feuille (31) devant être validée est amenée à passer et un lecteur (12) de code à barres, selon l'une quelconque des revendications précédentes, placé pour lire un code à barres (32) sur une feuille (31) passant le long du chemin (6) de feuille.

15. Procédé de fabrication d'un lecteur de code à barres comprenant la formation d'une fente (19) de transmission de la lumière et le montage de la fente par rapport à un moyen (15) à source de lumière et à un moyen (16) à détecteur de lumière, de façon que de la lumière provenant du moyen (15) à source de lumière puisse passer à travers la fente (19) et que de la lumière provenant du moyen à source de lumière (15), qui est renvoyée par réflexion à travers la fente (19), puisse être détectée par le moyen (16) à détecteur de lumière, **caractérisé en ce que :**
le lecteur de code à barres n'utilise pas de lentilles pour focaliser le faisceau sur le code à barres ou pour focaliser le faisceau sur le moyen (16) à détecteur de lumière ; et
le moyen à source de lumière est une DEL.

16. Procédé selon la revendication 15, dans lequel la fente (19) est formée par attaque chimique d'un élément métallique mince (18).

17. Procédé de fabrication d'un dispositif de validation de feuille comprenant un lecteur (12) de code à barres, le procédé comprenant un procédé selon la revendication 15 ou 16 pour la fabrication dudit lecteur de code à barres (12).
